(19) Europäisches Patentamt / European Patent Office / Office européen des brevets

(11) **EP 2 154 486 A1**

(12) **DEMANDE DE BREVET EUROPEEN**

(43) Date de publication:
**17.02.2010 Bulletin 2010/07**

(51) Int Cl.:
*G01D 5/20* (2006.01)　　*G01B 7/14* (2006.01)
*G01B 7/312* (2006.01)

(21) Numéro de dépôt: **09166535.6**

(22) Date de dépôt: **28.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **05.08.2008 FR 0804478**

(71) Demandeur: **Thales**
**92200 Neuilly Sur Seine (FR)**

(72) Inventeurs:
• **Chassoulier, Damien**
**06370, MOUANS-SARTOUX (FR)**
• **Champandard, Fabrice**
**06580, PEGOMAS (FR)**
• **Dargent, Thierry**
**06810, AURIBEAU/SUR/SAIGNE (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(54) **Dispositif de capteur de position radiale élargie sur plus de 90°**

(57)　L'invention permet de réaliser des capteurs de position radiale sans contact présentant une ouverture angulaire équivalente supérieure à 90°, et permettant d'éliminer au maximum les micro-vibrations parasites dues aux imperfections des capteurs actuels.

Pour cela, l'invention propose d'utiliser au moins quatre capteurs indépendants (Z1,Z2,Z3,Z4) et un dispositif électronique (E) capable de mettre virtuellement en série lesdits capteurs par groupes de deux ou de trois en vue d'élargir l'ouverture angulaire équivalente desdits groupes de capteurs.

FIG.4

EP 2 154 486 A1

## Description

La présente invention concerne un dispositif de mesure de la position radiale d'un rotor par rapport à un stator dans une roue à paliers magnétiques destinée à des applications spatiales.

Plus précisément, l'invention permet de réaliser des capteurs de position radiale sans contact présentant une ouverture angulaire équivalente supérieure à 90°, et permettant d'éliminer au maximum les micro-vibrations parasites dues aux imperfections des moyens de mesure actuels, qui seront explicités ci-dessous.

Aujourd'hui, les roues à paliers magnétiques destinées à des applications spatiales au sein d'actionneurs gyroscopiques comportent un rotor en lévitation autour d'un stator. Cette lévitation est contrôlée par un asservissement électronique basé sur un capteur de position, un actionneur, classiquement un palier magnétique, permettant de provoquer des déplacements du rotor, et un dispositif électronique qui commande l'actionneur en fonction des informations données par le capteur de position.

Le capteur de position en question est composé d'un ensemble de capteurs inductifs. Il comporte généralement une couronne de détection située au stator et une piste de détection située au rotor. La piste de détection est réalisée dans un matériau conducteur, généralement amagnétique. Le capteur de position permet de connaître la distance entre la couronne de détection et la piste de détection.

Or, la piste de détection, généralement cylindrique, présente des défauts qui peuvent être des défauts de surface, ou des défauts liés à la matière elle-même : résistivité, granulométrie... Ces défauts sont à l'origine de micro-vibrations parasites du rotor, car ils sont « vus » par le capteur de position, et l'asservissement électronique entraîne de multiples commandes de déplacements du rotor.

Par définition, les défauts de la piste de détection sont périodiques, puisqu'à chaque tour, un défaut de la piste de détection repasse devant le même capteur. Ils peuvent donc être décomposés en séries de Fourier comprenant une composante fondamentale et des harmoniques d'ordre 1 à N. La composante fondamentale n'est pas une propriété de la piste de détection mais plutôt une propriété mécanique du dispositif complet de roue à paliers magnétiques. Elle peut être filtrée de différentes manières.

La présente invention se situe dans un contexte où l'on cherche à minimiser les micro-vibrations parasites du rotor.

Les solutions actuellement envisagées sont de trois types : amélioration de la piste de détection afin d'en minimiser les défauts ; amélioration du capteur afin qu'il ne « voit » pas les défauts de la piste de détection ; filtration des défauts grâce à l'électronique.

Tout d'abord, il est connu que le fait de coupler deux capteurs diamétralement opposés permet d'éliminer les harmoniques d'ordre paire des vibrations parasites. Les capteurs de position de l'état de l'art peuvent par exemple comprendre quatre capteurs couplés deux à deux.

De plus, pour que les capteurs « voient » un minimum de défauts de la piste de détection, leur ouverture angulaire peut être augmentée : ainsi, dans l'état de l'art, on a pu passer de capteurs ponctuels à des capteurs ayant une ouverture angulaire proche de 90°. Ces capteurs élargis « voient » moins de défauts, car ils mesurent des valeurs moyennes sur un grand angle, ce qui permet d'éliminer les harmoniques d'ordre élevé. Cependant, trop de micro-vibrations parasites perdurent ; elles correspondent aux harmoniques d'ordre faible de la décomposition en séries de Fourier des défauts de la piste de détection.

La présente invention permet de s'affranchir en grande partie de ce défaut persistant. Ainsi, pour obtenir une roue à paliers magnétiques soumises à un minimum de micro-vibrations parasites, l'invention propose d'élargir angulairement au-delà de 90° l'ouverture des capteurs, à une valeur permettant de lisser au mieux les défauts de la piste de détection. Ceci est rendu possible par l'utilisation d'au moins quatre capteurs indépendants électriquement et décalés par rapport aux axes d'actuation de la roue à paliers magnétiques.

A cet effet, l'invention a pour objet un dispositif de capteur de position radiale destiné à des roues à paliers magnétiques, comportant :

- un rotor comprenant une piste de détection,
- un stator comprenant une couronne de détection,

ledit dispositif étant associé à un repère orthogonal direct fixe par rapport à la couronne de détection et comprenant un premier axe d'actuation, un deuxième axe d'actuation et un axe de rotation autour duquel le rotor peut tourner, caractérisé en ce qu'il comporte au moins quatre capteurs électriquement indépendants, dont un au moins est décalé par rapport aux premier et deuxième axes d'actuation, et fixes par rapport à la couronne de détection, permettant de mesurer de façon indépendante les positions de la piste de détection par rapport à chacun des capteurs, et de déterminer par calcul les positions de la piste de détection par rapport à la couronne de détection dans ledit repère orthogonal direct.

Avantageusement, le dispositif selon l'invention peut comprendre quatre capteurs, dont un premier capteur est décalé d'environ 45° dans le sens trigonométrique par rapport au deuxième axe d'actuation, et des deuxième, troisième et quatrième capteurs répartis de façon homogène dans cet ordre, à 90° les uns des autres dans le sens trigonométrique, dans un plan défini par les premier et deuxième axes d'actuation du repère orthogonal direct.

Avantageusement, chaque capteur présente une ouverture angulaire comprise entre environ 45° et 90°.

Avantageusement, chaque capteur présente une ouverture angulaire d'environ 60°, permettant d'obtenir, par couplage desdits capteurs deux à deux, une ouverture angulaire équivalente de 120° par couple de capteurs.

Avantageusement, le dispositif selon l'invention peut comprendre six capteurs, dont un premier capteur aligné avec le deuxième axe d'actuation et des deuxième, troisième, quatrième, cinquième et sixième capteurs répartis de façon homogène à 60° les uns des autres dans un plan défini par les premier et deuxième axes d'actuation du repère orthogonal direct.

Avantageusement, chaque capteur présente une ouverture angulaire comprise entre environ 30° et 60°.

Avantageusement, le dispositif selon l'invention comporte en outre un dispositif électronique permettant d'exciter électriquement les capteurs et de réaliser les calculs basés sur les mesures effectuées par chacun des capteurs, permettant de déterminer la position de la piste de détection par rapport à la couronne de détection dans le repère orthogonal direct.

Avantageusement, un procédé de détermination de la position radiale d'un rotor par rapport à un stator comprend l'utilisation du dispositif selon l'invention, et comporte les étapes suivantes :

- dans un premier temps, le premier capteur mesure une première tension liée à la position de la piste de détection par rapport audit premier capteur, le deuxième capteur mesure une deuxième tension liée à la position de la piste de détection par rapport audit deuxième capteur, le troisième capteur mesure une troisième tension liée à la position de la piste de détection par rapport audit troisième capteur, le quatrième capteur mesure une quatrième tension liée à la position de la piste de détection par rapport audit quatrième capteur,
- dans un second temps, les moyens de calculs effectuent d'une part la somme des troisième et quatrième tensions à laquelle est soustraite la somme des première et deuxième tensions, et d'autre part la somme des première et quatrième tensions à laquelle est soustraite la somme des deuxième et troisième tensions d'autre part,

permettant de déterminer la position de la piste de détection dans le repère orthogonal direct par le calcul de coordonnées de ladite piste de détection selon les premier et deuxième axes d'actuation dudit repère orthogonal direct.

D'autres caractéristiques et avantages de l'invention apparaîtront à l'aide de la description qui suit faite en regard des dessins annexés qui représentent :

- la figure 1 : le schéma d'un premier exemple de capteur de position radiale selon l'état de l'art ;
- la figure 2 : la représentation schématique du montage électrique en pont d'un couple de capteurs, enseigné dans l'état de l'art ;
- la figure 3 : le schéma d'un deuxième exemple de capteur de position radiale selon l'état de l'art, doté de capteurs à ouverture angulaire large ;
- la figure 4 : le schéma d'un premier exemple de capteur de position radiale selon l'invention, comprenant quatre capteurs indépendants électriquement ;
- la figure 5 : le schéma d'un deuxième exemple de capteur de position radiale selon l'invention, comprenant six capteurs indépendants électriquement ;
- la figure 6 : la courbe de l'atténuation des harmoniques d'ordre 3, 5 et 7 des micro-vibrations parasites en fonction de l'ouverture angulaire des capteurs de position radiale.

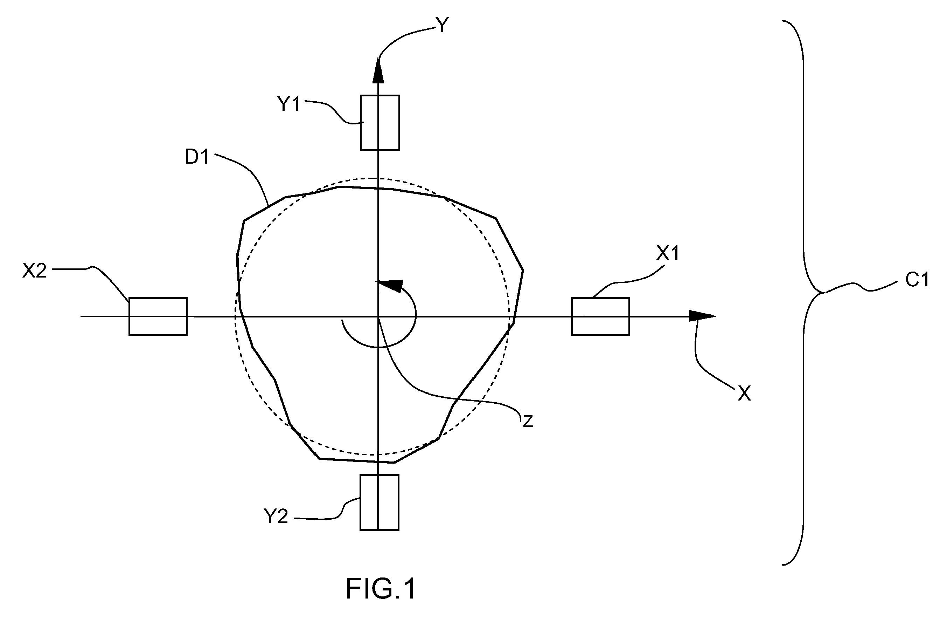

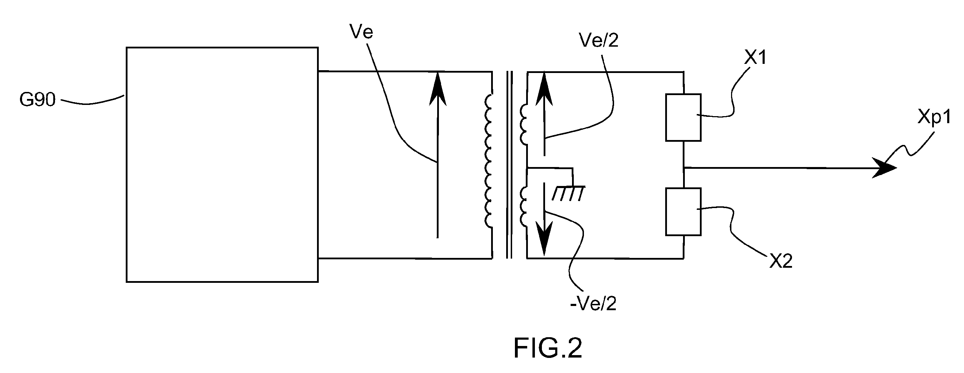

La figure 1 présente un schéma d'un capteur de position selon l'état de l'art. Celui-ci comprend quatre capteurs ponctuels couplés par paires X1, X2 et Y1, Y2. Ce capteur de position peut être rapproché du dispositif décrit dans le brevet français FR 2630542, dont il peut être considéré comme un exemple d'application. Le capteur de position radiale présenté en figure 1 peut être associé à une roue à paliers magnétiques comportant un rotor comprenant une piste de détection D1 et un stator où se situe une couronne de détection dotée des capteurs ponctuels X1, X2 et Y1, Y2 couplés par paires de capteurs diamétralement opposés. Le stator et l'ensemble de capteurs ponctuels X1, X2, Y1, Y2 sont associés à un repère orthogonal direct fixe par rapport à eux. Ce repère orthogonal direct est constitué des premier et deuxième axes d'actuation X et Y et de l'axe de rotation Z autour duquel le rotor peut tourner. Une première paire de capteurs, X1 et X2, est située sur le premier axe d'actuation X, et une deuxième paire de capteurs, Y1 et Y2, est située sur le deuxième axe d'actuation Y. Le couplage par paires des capteurs, X1 et X2 d'une part, Y1 et Y2 d'autre part, est concrétisé par un câblage électrique en pont de chaque paire de capteurs, comme cela est expliqué en figure 2. La valeur mesurée par le couple de capteurs X1, X2 permet de déterminer la position de la piste de détection D1 par rapport au premier axe d'actuation X tandis que le couple de capteurs Y1, Y2 permet de déterminer la position de la piste de détection D1 par rapport au deuxième axe d'actuation Y. En fonction de la position mesurée de la piste de détection D1 dans le repère orthogonal direct X,Y,Z, le dispositif commande via des paliers magnétiques des déplacements relatifs du rotor par rapport au stator.

Comme cela a été expliqué précédemment, ces capteurs ponctuels X1, X2, Y1, Y2 « voient » des défauts de la piste de détection D1 qui n'est pas un cylindre parfait. Les capteurs X1, X2, Y1, Y2 étant couplés par paires de capteur diamétralement opposés, seuls les harmoniques d'ordre paire de la décomposition en séries de Fourier des défauts de la piste de détection D1 sont annulés. Le dispositif perçoit donc des déplacements du rotor à compenser et commande des micro-déplacements de ce dernier. Ceci induit des micro-vibrations parasites.

La figure 2 représente schématiquement la façon dont une paire de capteurs X1, X2 tels que décrits en figure 1 peut être électriquement câblée en pont. Le générateur G90 fournit une tension Ve à une fréquence classiquement comprise entre 50 kHz et 100 kHz ; dans l'exemple de la figure 2, cette fréquence est de 90 kHz. Un diviseur de tension permet d'amener une tension $\dfrac{Ve}{2}$ aux bornes du capteur X1 et $-\dfrac{Ve}{2}$ aux bornes du capteur X2. Au point Xp1, on mesure une tension qui permet de déterminer la position de la piste de détection D1 par rapport au premier axe d'actuation X.

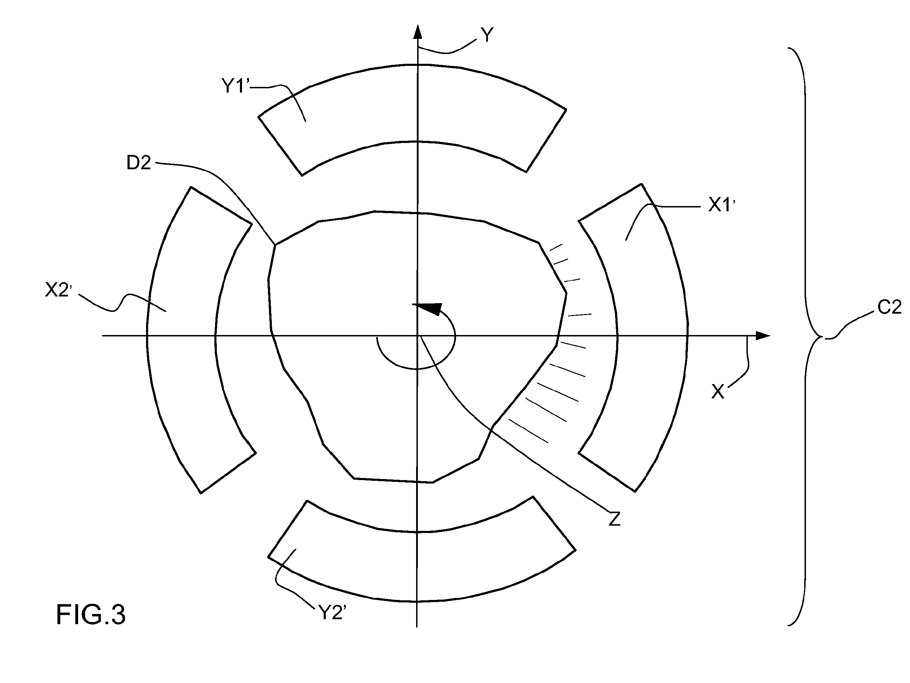

La figure 3 illustre une technologie connue permettant de limiter les micro-vibrations parasites du rotor d'une roue à paliers magnétiques. Celle-ci comporte quatre capteurs X1', X2', Y1', Y2' à ouverture angulaire élargie. Comme pour le dispositif de la figure 1, les quatre capteurs sont couplés par paires de capteurs diamétralement opposés : X1', X2' d'une part et Y1', Y2' d'autre part. De même, chaque paire de capteurs est câblée en pont ; sur le même principe que précédemment, la valeur mesurée par le couple de capteurs X1', X2' permet de déterminer la position de la piste de détection D2 par rapport au premier axe d'actuation X tandis que le couple de capteurs Y1', Y2' permet de déterminer la position de la piste de détection D2 par rapport au deuxième axe d'actuation Y. En fonction de la position mesurée de la piste de détection D2 dans le repère orthogonal direct X, Y,Z, le dispositif commande via des paliers magnétiques des déplacements relatifs du rotor par rapport au stator. Toujours comme pour le dispositif de la figure 1, le couplage par paires de capteurs X1', X2' et Y1', Y2' diamétralement opposés permet d'éliminer les harmoniques d'ordre paire de la décomposition en séries de Fourier des défauts de la piste de détection D2. La différence réside donc dans l'ouverture angulaire élargie de chacun des capteurs X1', X2', Y1' et Y2'. Cette ouverture angulaire peut atteindre environ 90°. En conséquence, les capteurs ne « voient » que la moyenne des défauts de la piste de détections D2 sur un angle de 90° environ, correspondant à leur ouverture angulaire. De ce fait, le dispositif « voit » moins de défaut et il y a donc moins de micro-vibrations.

Cependant, il persiste toujours des micro-vibrations et l'objet de l'invention est de les réduire davantage.

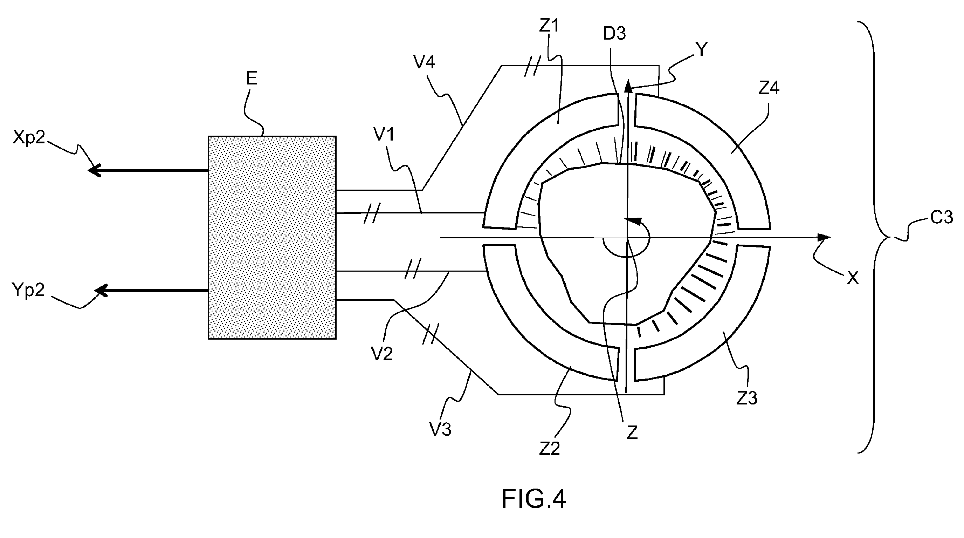

La figure 4 représente un premier exemple de mise en oeuvre de l'invention. Comme dans l'état de l'art décrit en figure 3, ce dispositif selon l'invention comprend quatre capteurs Z1, Z2, Z3, Z4, dont l'ouverture angulaire peut être proche de 90°, répartis de façon homogène, les quatre capteurs Z1, Z2, Z3, Z4 étant diamétralement opposés deux à deux. En revanche, contrairement à ce qui est enseigné dans l'état de la technique, les quatre capteurs Z1, Z2, Z3, Z4 du dispositif selon l'invention présenté en figure 4 sont indépendants les uns des autres. Ils sont électriquement câblés de façon indépendante. Ainsi, le capteur Z1 mesure une tension V1 permettant de déterminer la position de la piste de détection D3 par rapport audit capteur Z1. Il en va de même pour chacun des autres capteurs Z2, Z3, Z4 qui mesurent respectivement des tensions V2, V3 et V4 permettant de déterminer la position de la piste de détection D3 par rapport à, respectivement, Z2, Z3 et Z4. Par ailleurs, les capteurs Z1, Z2, Z3, Z4 ne sont pas alignés avec les premier et deuxième axes d'actuation X et Y, contrairement à ce qui est fait dans l'état de l'art. Dans l'exemple de la figure 4, les capteurs sont décalés d'environ 45° par rapport auxdits axes d'actuation X et Y. On rappelle ici que lesdits premier et deuxième axes d'actuation X et Y forment toujours avec l'axe de rotation Z un repère orthogonal direct fixe par rapport au stator et aux capteurs Z1, Z2, Z3, Z4.

Le dispositif selon l'invention présenté en figure 4 comprend par ailleurs un dispositif électronique E. Ce dispositif électronique E permet d'exciter électriquement chaque capteur et de déterminer par le calcul les coordonnées de la piste de détection D3 dans le repère orthogonal direct formé par les premier et deuxième axes d'actuation X et Y. La position de la piste de détection par rapport au premier axe d'actuation X se déduit du calcul de Xp2 = (V1+V4)-(V2+V3) et la position de la piste de détection par rapport au deuxième axe d'actuation Y se déduit du calcul de Yp2 = (V3+V4)-(V1+V2). Ainsi, grâce à ces calculs simples réalisés par le dispositif électronique E, on met artificiellement en série les capteurs deux à deux. Pour déterminer Xp2, les capteurs Z1 et Z4 d'une part et les capteurs Z2 et Z3 d'autre part sont ainsi « mis en série ». Pour déterminer Yp2, ce sont Z1 et Z2 d'un côté et Z3 et Z4 de l'autre qui sont « mis en série ». De cette façon chaque couple de capteurs « mis en série » présente une ouverture angulaire virtuellement élargie à près de 180°, soit deux fois l'ouverture angulaire d'un seul capteur. De plus, comme cela a été expliqué précédemment, la combinaison deux à deux de capteurs diamétralement opposés permet d'annuler tous les harmoniques d'ordre paire de la décomposition en séries de Fourier des défauts de la piste de détection D3. Si chaque capteur indépendant possède une ouverture angulaire de 60°, ce principe permet d'avoir une ouverture angulaire théorique de 120° pour chaque couple de capteurs « mis en série ». L'élargissement à plus de 90° de l'ouverture angulaire équivalente du dispositif de mesure de position selon l'invention permet de lisser les défauts de la piste de détection D3 davantage que ce qui est possible dans l'état de l'art. En conséquence, les micro-vibrations parasites de la roue à paliers magnétiques embarquant ce dispositif sont encore réduites.

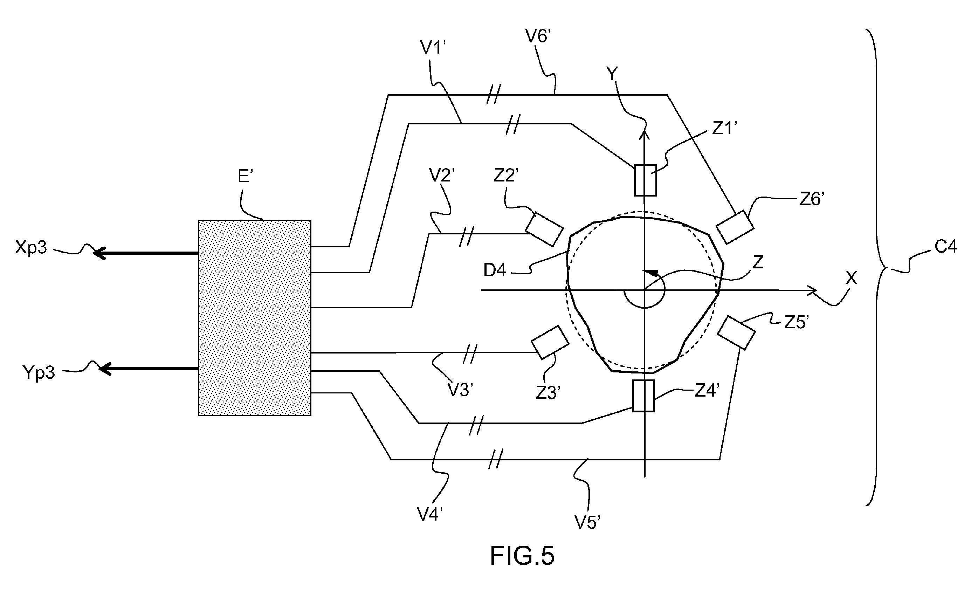

La figure 5 présente un autre exemple de mise en oeuvre de l'invention. Le principe est le même que celui décrit en figure 4, mais avec six capteurs Z1', Z2', Z3', Z4', Z5', Z6' indépendants. Le dispositif électronique E' peut combiner ces capteurs par groupes de deux ou trois. Ainsi, on peut éliminer de fait tous les harmoniques d'ordre paire et tous les harmoniques d'ordre multiple de trois de la décomposition en séries de Fourier des défauts de la piste de détection D4. Ensuite, selon le même principe que pour le dispositif de la figure 4, le dispositif électronique E' permet de calculer la position de la piste de détection D4 par rapport au premier axe d'actuation X et par rapport au deuxième axe d'actuation Y. Pour cela, le dispositif électronique E' peut mettre virtuellement en série deux ou trois capteurs et multiplier ainsi par deux ou trois l'ouverture angulaire équivalente du dispositif de mesure de la position radiale du rotor par rapport au stator dans une roue à paliers magnétiques.

Les six capteurs Z1', Z2', Z3', Z4', Z5', Z6' sont ici également répartis de façon homogène, à 60° les uns des autres. Ils peuvent présenter une ouverture angulaire allant jusqu'à près de 60°.

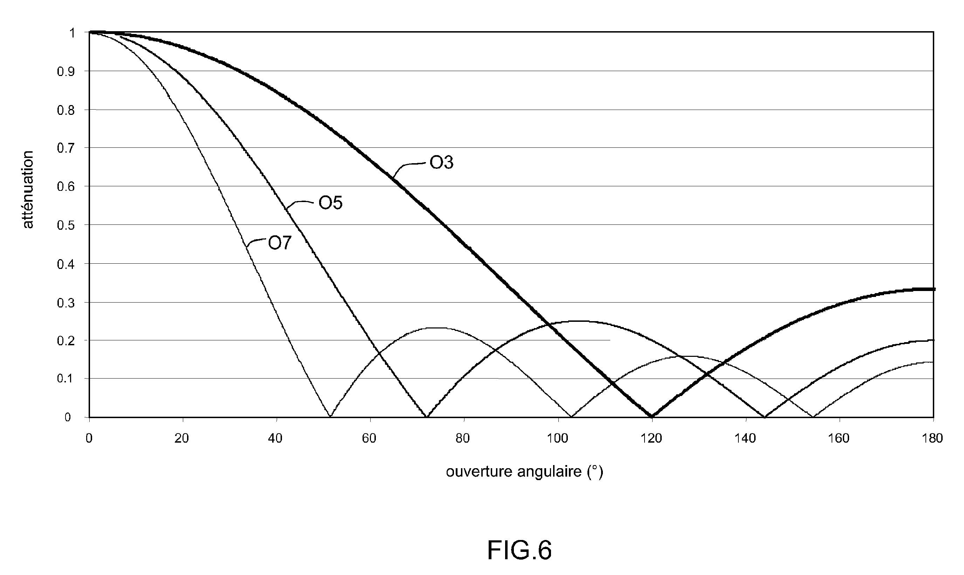

La figure 6 présente un graphique démontrant qu'il existe un lien entre l'ouverture angulaire des capteurs inductifs intégrés au dispositif de mesure selon l'invention et l'atténuation des harmoniques d'ordre faible de la décomposition en séries de Fourier des défauts de la piste de détection D3 ou D4. Ce graphique permet de constater que pour atténuer au maximum les harmoniques résiduelles les plus gênantes, à savoir les harmoniques d'ordre 3, 5 et 7, respectivement notés 03, 05 et 07 sur la figure 6, de la décomposition en séries de Fourier des défauts de la piste de détection D3 ou D4, l'ouverture angulaire équivalente optimale des capteurs Z1 à Z4 ou Z1' à Z6' se situe entre 100 ° et 150 °.

En résumé, l'invention présente pour principal avantage de permettre d'annuler une grande partie des micro-vibrations parasites qui affectent les roues à paliers magnétiques actuelles. Pour cela, l'invention propose d'utiliser au moins quatre capteurs indépendants et un dispositif électronique capable de mettre virtuellement en série lesdits capteurs par groupes de deux ou de trois en vue d'élargir à plus de 90° l'ouverture angulaire équivalente desdits groupes de capteurs.

**Revendications**

1. Dispositif de capteur de position radiale destiné à des roues à paliers magnétiques, comportant :

   • un rotor comprenant une piste de détection (D3) (D4),
   • un stator comprenant une couronne de détection,
   ledit dispositif étant associé à un repère orthogonal direct fixe par rapport à la couronne de détection et comprenant un premier axe d'actuation (X), un deuxième axe d'actuation (Y) et un axe de rotation (Z) autour duquel le rotor peut tourner, **caractérisé en ce qu'**il comporte :
   • au moins quatre capteurs (Z1,Z2,Z3,Z4) (Z1', Z2',Z3',Z4',Z5',Z6') électriquement indépendants, dont un au moins est décalé par rapport aux premier (X) et deuxième (Y) axes d'actuation, et fixes par rapport à la couronne de détection,
   • des moyens de calcul associés auxdits capteurs,
   permettant de mesurer de façon indépendante les positions de la piste de détection (D3) (D4) par rapport à chacun des capteurs (Z1,Z2,Z3,Z4) (Z1',Z2',Z3',Z4',Z5',Z6'), et de déterminer par calcul les positions de la piste de détection (D3) (D4) par rapport à la couronne de détection dans ledit repère orthogonal direct.

2. Dispositif selon la revendication 1, **caractérisé en ce qu'**il comprend quatre capteurs (Z1,Z2,Z3,Z4), dont un premier capteur (Z1) est décalé d'environ 45° dans le sens trigonométrique par rapport au deuxième axe d'actuation, et des deuxième (Z2), troisième (Z3) et quatrième (Z4) capteurs répartis de façon homogène dans cet ordre, à 90° les uns des autres dans le sens trigonométrique, dans un plan défini par les premier (X) et deuxième (Y) axes d'actuation du repère orthogonal direct.

3. Dispositif selon la revendication 2, **caractérisé en ce que** chaque capteur (Z1,Z2,Z3,Z4) présente une ouverture angulaire comprise entre environ 45° et 90°.

4. Dispositif selon la revendication 2, **caractérisé en ce que** chaque capteur (Z1,Z2,Z3,Z4) présente une ouverture angulaire d'environ 60°, permettant d'obtenir, par couplage desdits capteurs deux à deux, une ouverture angulaire équivalente de 120° par couple de capteurs.

5. Dispositif selon la revendication 1, **caractérisé en ce qu'**il comprend six capteurs (Z1',Z2',Z3',Z4',Z5', Z6'), dont un premier capteur (Z1') aligné avec le deuxième axe d'actuation (Y) et des deuxième (Z2'), troisième (Z3'), quatrième (Z4'), cinquième (Z5') et sixième (Z6') capteurs répartis de façon homogène à 60° les uns des autres dans un plan défini par les premier (X) et deuxième (Y) axes d'actuation du repère orthogonal direct.

6. Dispositif selon la revendication 5, **caractérisé en ce que** chaque capteur (Z1',Z2',Z3',Z4',Z5',Z6') présente une ouverture angulaire comprise entre environ 30° et 60°.

7. Dispositif selon l'une quelconque des revendications 1 à 6, **caractérisé en ce que** les moyens de calculs associés auxdits capteurs (Z1,Z2,Z3,Z4) (Z1',Z2', Z3',Z4',Z5',Z6') consiste en un dispositif électronique (E) (E') permettant d'exciter électriquement les capteurs et de réaliser les calculs basés sur les mesures (V1,V2,V3,V4) (V1',V2',V3',V4',V5',V6') effectuées par chacun des capteurs (Z1,Z2,Z3,Z4) (Z1', Z2',Z3',Z4',Z5',Z6'), permettant de déterminer la position de la piste de détection (D3) (D4) par rapport à la couronne de détection dans le repère orthogonal direct.

8. Procédé de détermination de la position radiale d'un rotor par rapport à un stator, **caractérisé en ce qu'**il comprend l'utilisation du dispositif selon l'une quelconque des revendications 2, 3, 4 ou 7, et **en ce qu'**il comporte les étapes suivantes :

• dans un premier temps, le premier capteur (Z1) mesure une première tension (V1) liée à la position de la piste de détection (D3) par rapport audit premier capteur (Z1), le deuxième capteur (Z2) mesure une deuxième tension (V2) liée à la position de la piste de détection (D3) par rapport audit deuxième capteur (Z2), le troisième capteur (Z3) mesure une troisième tension (V3) liée à la position de la piste de détection (D3) par rapport audit troisième capteur (Z3), le quatrième capteur (Z4) mesure une quatrième tension (V4) liée à la position de la piste de détection (D3) par rapport audit quatrième capteur (Z4),
• dans un second temps, les moyens de calculs effectuent d'une part la somme des troisième (V3) et quatrième (V4) tensions à laquelle est soustraite la somme des première (V1) et deuxième (V2) tensions, et d'autre part la somme des première (V1) et quatrième (V4) tensions à laquelle est soustraite la somme des deuxième (V2) et troisième (V3) tensions d'autre part,

permettant de déterminer la position de la piste de détection (D3) dans le repère orthogonal direct par le calcul de coordonnées de ladite piste de détection (D3) selon les premier (X) et deuxième (Y) axes d'actuation dudit repère orthogonal direct.

FIG.1

Y

Y1

D1

X2

X1

C1

EP 2 154 486 A1

Z

X

Y2

FIG.2

FIG.3

FIG.4

FIG.5

FIG.6

EP 2 154 486 A1

Europäisches
Patentamt

European
Patent Office

Office européen
des brevets

**RAPPORT DE RECHERCHE EUROPEENNE**

Numéro de la demande

EP 09 16 6535

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 422 492 A (MECOS TRAXLER AG [CH]) 26 mai 2004 (2004-05-26) | 1,5-7 | INV. G01D5/20 |
| A | * abrégé * | 2-4 | G01B7/14 G01B7/312 |
| | ----- | | |
| X | DE 42 15 381 A1 (SIEMENS AG [DE]) 18 novembre 1993 (1993-11-18) * colonne 2, ligne 10 - ligne 58; figures 1,2 * | 1,7 | |
| | ----- | | |
| X | GB 2 105 475 A (SEIKO INSTR & ELECTRONICS [JP]) 23 mars 1983 (1983-03-23) * le document en entier * | 1 | |
| | ----- | | |
| A | WO 97/37146 A (SOC D MECANIQUE MAGNETIQUE [FR]; BRUNET MAURICE [FR]; SCHROEDER ULRICH) 9 octobre 1997 (1997-10-09) * abrégé; figures 1-3 * | 2-4 | |
| | ----- | | |

**DOMAINES TECHNIQUES RECHERCHES (IPC)**

G01D
G01P
G01B
F16C

Le présent rapport a été établi pour toutes les revendications

| Lieu de la recherche | Date d'achèvement de la recherche | Examinateur |
|---|---|---|
| La Haye | 16 décembre 2009 | Keita, Mamadou |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**EP 2 154 486 A1**

**ANNEXE AU RAPPORT DE RECHERCHE EUROPEENNE
RELATIF A LA DEMANDE DE BREVET EUROPEEN NO.**

EP 09 16 6535

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-12-2009

| Document brevet cité au rapport de recherche | | Date de publication | Membre(s) de la famille de brevet(s) | | Date de publication |
|---|---|---|---|---|---|
| EP 1422492 | A | 26-05-2004 | AU | 2003273719 A1 | 18-06-2004 |
| | | | WO | 2004048883 A1 | 10-06-2004 |
| | | | CN | 1708671 A | 14-12-2005 |
| | | | JP | 2006509189 T | 16-03-2006 |
| | | | KR | 20050071684 A | 07-07-2005 |
| | | | US | 2006152320 A1 | 13-07-2006 |
| DE 4215381 | A1 | 18-11-1993 | AUCUN | | |
| GB 2105475 | A | 23-03-1983 | DE | 3232870 A1 | 24-03-1983 |
| | | | FR | 2512544 A1 | 11-03-1983 |
| | | | JP | 1651154 C | 30-03-1992 |
| | | | JP | 2021521 B | 15-05-1990 |
| | | | JP | 58041304 A | 10-03-1983 |
| WO 9737146 | A | 09-10-1997 | EP | 0890033 A1 | 13-01-1999 |
| | | | FR | 2746870 A1 | 03-10-1997 |
| | | | JP | 2000508069 T | 27-06-2000 |

EPO FORM P0460

Pour tout renseignement concernant cette annexe : voir Journal Officiel de l'Office européen des brevets, No.12/82

14

**EP 2 154 486 A1**

RÉFÉRENCES CITÉES DANS LA DESCRIPTION

**Documents brevets cités dans la description**

- FR 2630542